# EUROPÄISCHE PATENTSCHRIFT

(11) **EP 3 450 022 B1**
(45) Veröffentlichungstag und Bekanntmachung des Hinweises auf die Patenterteilung: **16.10.2019**
(21) Anmeldenummer: 18189449.4
(22) Anmeldetag: 17.08.2018
(51) Int. Cl.: B02C 4/06, B02C 4/28, A47J 42/08

(54) **VORRICHTUNG ZUM QUETSCHEN ODER MAHLEN VON KÖRNERN ODER FLOCKEN**
DEVICE FOR CRUSHING OR GRINDING OF GRAIN OR FLAKES
DISPOSITIF DE CONCASSAGE OU DE BROYAGE DE GRAINS OU DE FLOCONS

(30) Priorität: 31.08.2017 DE 102017119993
(43) Veröffentlichungstag der Anmeldung: 06.03.2019
(73) Patentinhaber: Wolfgang Mock GmbH, 64853 Otzberg-Langfeld (DE)
(72) Erfinder: Mohr, Thomas, 64354 Reinheim (DE); Mock, Wolfgang, 64853 Otzberg (DE)
(74) Vertreter: Kruspig, Volkmar

(56) Entgegenhaltungen:
- DE-A1- 3 447 334
- DE-C- 125 661
- DE-U1- 9 005 018

## Beschreibung

Die Erfindung betrifft eine Vorrichtung zum Quetschen oder Mahlen von Körnern oder Flocken mit mindestens zwei gegenläufig antreibbaren, drehbeweglichen Walzen, wobei die Walzen einen Mahl- oder Quetschspalt bildend in einem Gehäuse angeordnet sind, so dass ein Quetsch- oder Mahlwerk entsteht, wobei oberhalb des Quetsch- oder Mahlwerkes eine trichterförmige Mahlgutaufgabe ausgebildet ist, welche in eine Auslaufkontur übergeht gemäß Oberbegriff des Anspruches 1.

Aus der DE 44 22 105 C2 ist ein Gerät zum Mahlen und Quetschen von Getreide vorbekannt. In einem dortigen Gehäuse ist ein Mahlwerk angeordnet, das aus einem feststehendem und einem drehbaren Mahlkörper besteht. Die Mahlkörper verfügen über einen Antrieb, wobei dieser einen Elektromotor aufweist, der in seiner Drehrichtung umschaltbar ist. Über eine Freilaufanordnung kann zum einen das Mahlwerk eingekuppelt und das Quetschwerk freigeschalten werden, während bei einer Änderung der Drehrichtung des Elektromotors der Freilauf des Quetschwerkes eingekuppelt und der Freilauf des Mahlwerkes freigeschalten ist.

Die dortigen Walzen weisen eine kegelstumpfförmige Gestalt auf, wobei der jeweilige Mahlspalt über seine gesamte Länge gleichmäßig ausgebildet, jedoch in der Breite verstellbar ist. Weiterhin ist an der Oberseite des Gehäuses ein Zufuhrtrichter zum Mahlwerk und zum Quetschwerk vorgesehen.

Bei der handbetriebenen Flockenquetsche nach DE 296 07 241 U1 befinden sich zwei an einem Gestell drehbar mit horizontalen, zueinander parallelen Drehachsen gelagerte Quetschwalzen, die zwischen sich einen Quetschspalt bilden. Die vorbekannte Flockenquetsche weist ebenso einen Beschickungstrichter auf, dessen Trichterauslauf in den Quetschspalt mündet. Die Drehachsen der Quetschwalzen liegen auf einer in einem Winkel von etwa 30 bis 60° gegenüber der horizontal ansteigenden Ebene, um einen selbstregulierenden Zulauf von Mahlgut zu bewerkstelligen.

Aus der AT 14370 U1 ist eine Flockenquetsche mit zwei Walzen vorbekannt, die unter Freilassung eines Spaltes zum Durchtritt der Flocken in einem Gestell gelagert sind. Eine der Walzen ist als Antriebswalze über eine Kurbel drehbar. Die Größe eines dortigen Mahlspaltes kann über die Verstellung von Flügelmuttern geändert werden. Andere Beispiele von Quetschvorrichtungen mit einstellbarem Mahlspalt sind in DE 9005018U und DE 3447334 A1 offenbart. DE 125661 offenbart eine Quetschvorrichtung mit konischen Walzen und einem verstellbaren Schüttrumpf. Durch das Verschieben des Schüttrumpfes wird die Leistungsfähigkeit der Vorrichtung variiert.

Bei der gattungsbildenden DE 41 22 918 B4 handelt es sich um eine Vorrichtung zum Quetschen und/oder Mahlen von Körnern, wie zum Beispiel Getreideflocken, in Form eines Tischgerätes mit walzenförmigen Quetsch- oder Mahlwerken, die zwischen ihren Oberflächen einen Spalt für die Getreidekörner bilden.

Bei der bekannten Vorrichtung kommen kegelförmige Walzen zum Einsatz, deren gegenüberliegende Kegelmantelflächen den Quetsch- bzw. Mahlspalt für die Getreidekörner bilden. Die im Querschnitt trapezförmigen Kegelwalzen sind nebeneinander derart angeordnet, dass die Höhe der kegelförmigen Abschnitte der Walzen kleiner als deren Durchmesser ist. Darüber hinaus ist ein definierter Kegelmantelwinkel einzuhalten. Zur Verstellung des Quetschspaltes sind gemäß DE 41 22 918 B4 die Kegelwalzen axial gegeneinander verschiebbar. Der Quetschspalt wird bei einer entsprechenden Verschiebebewegung über seine gesamte Länge gleichmäßig vergrößert oder verkleinert, so dass ein unterschiedlicher Flockungsgrad bzw. gemahlenes Gut unterschiedlicher Körnung zur Verfügung steht.

Den vorgenannten Lösungen des Standes der Technik ist gemeinsam, dass zur Einstellung der Feinheit des Mahlgutes, sei es nun eines geflockten Mahlgutes oder klassischen Mahlgutes die Relativposition der Walzen, welche den Mahlspalt bilden, veränderbar zu gestalten ist. Es muss also in jedem Falle eine mechanische Vorrichtung nebst Verstellantrieb geschaffen werden, um den jeweiligen Bedingungen des aufgegebenen Gutes entsprechend und an den Mahlwunsch orientiert, den Mahlspalt verändern zu können.

Aus dem Vorgenannten ist es Aufgabe der Erfindung, eine weiterentwickelte Vorrichtung zum Quetschen oder Mahlen von Körnern oder Flocken mit mindestens zwei gegenläufig antreibbaren, drehbeweglichen Walzen anzugeben, wobei die Walzen einen Mahl- oder Quetschspalt bildend in einem Gehäuse angeordnet sind und bei der ein unterschiedlicher Körnungs- oder Quetschgrad des aufgegebenen Gutes wahlweise erhalten werden kann, ohne dass eine Veränderung der Relativposition der Walzen zueinander erforderlich wird.

Die Lösung der Aufgabe der Erfindung erfolgt mit einer Vorrichtung gemäß der Merkmalskombination nach Anspruch 1, wobei die Unteransprüche mindestens zweckmäßige Ausgestaltungen und Weiterbildungen beinhalten.

Die Erfindung greift dabei auf den Grundgedanken zurück, einen fixen Mahlspalt zu bilden, der über seine Länge eine unterschiedliche Spaltbreite aufweist.

Dies kann beispielsweise dadurch realisiert werden, dass zwei Kegelwalzen oder konische Walzen im Wesentlichen achsparallel zueinander angeordnet werden.

Alternativ besteht die Möglichkeit, Zylinderwalzen so anzuordnen, dass sich die Längsachsen dieser Zylinderwalzen sich in einer gedachten Längsachsenverlängerung schneiden, wobei auch in diesem Falle ein Mahlspalt entsteht, der über seine Spaltlänge eine unterschiedliche Spaltbreite aufweist.

Um nun einen unterschiedlichen Feinheitsgrad oder Quetschgrad zu erreichen, besteht die Möglichkeit, eine trichterförmige Mahlgutaufgabe über die Länge des Mahl- oder Quetschspaltes verschieblich auszuführen.

Wird beispielsweise die Auslaufkontur einer derartigen Mahlgutaufgabe in einen solchen Bereich bewegt, in dem die Spaltbreite des Mahlspaltes relativ groß ist, entsteht ein gröberes Mahlgut.

Wird hingegen die Mahlgutaufgabe mit ihrer Auslaufkontur in einen solchen Bereich bewegt, bei dem ein sehr enger Mahlspalt vorliegt, erfolgt eine Feinmahlung oder feinere Quetschung.

Die Vorrichtung kann insofern konstruktiv sehr einfach aufgebaut sein, da die Walzen im Gehäuse nicht relativ zueinander verstellbar ausgeführt werden müssen.

Die Verschiebung eines Mahlgutaufgabetrichters mit entsprechender Auslaufkontur auf der Oberseite des entsprechenden Gehäuses ist leicht technisch umzusetzen und erfordert keine aufwändige Lagerung, wie dies bei Walzen der Fall ist, die zum Verändern eines Mahlspaltes zueinander verstellbar auszuführen sind.

Gemäß einer bevorzugten Ausführungsform der Erfindung ist die Austrittsbreite der Mahlgutaufgabe, das heißt der Bereich der Auslaufkontur kleiner als die Länge des Mahlspaltes.

Die Verschiebung der Mahlgutaufgabe ist im Wesentlichen in Längsachsenrichtung der Walzen ausgeführt.

Der Abstand der Mahlgutaufgabe und des Austrittes des Mahlgutes kann zur Oberfläche der Walzen hin einstellbar sein, um hierdurch die Menge des aufgegebenen Mahlgutes zu regulieren.

Einbauseitig können mehrere Fixpunkte zum Montieren der Walzen für eine Grundeinstellung des Mahl- oder Quetschspaltes vorgesehen sein.

Darüber hinaus besteht ein Gedanke der Erfindung darin, die Walzen austauschbar im Gehäuse anzuordnen.

Der Antrieb der Walzen kann manuell, das heißt händisch, zum Beispiel mittels Kurbelantrieb aber auch elektromotorisch ausgebildet werden.

In quasi kinematischer Umkehr des erfindungsgemäßen Prinzips besteht die Möglichkeit, die bezogen auf den festen Mahlspalt angeordneten Walzen verschieblich zur Mahlgutaufgabe anzuordnen. In diesem Fall wäre quasi der Trichter der Mahlgutaufgabe fest und es erfolgt eine Verschiebung beider Walzen in Längsachsenrichtung, so dass jeweils Abschnitte unterschiedlicher Breite des Mahlspaltes unterhalb der Mahlgutaufgabe zu liegen kommen.

Die Erfindung soll nachstehend anhand eines Ausführungsbeispieles sowie unter Zuhilfenahme von Figuren näher erläutert werden.

Hierbei zeigen:
- Fig. 1: eine Prinzip-Seitenansicht der erfindungsgemäßen Vorrichtung mit erkennbaren Walzen des Mahlwerkes und diesbezüglich verschieblicher Mahlgutaufgabe in Form eines Trichters, und
- Fig. 2: eine Draufsicht-Prinzipdarstellung der erfindungsgemäßen Vorrichtung mit der Auslaufkontur, das heißt dem austrittsseitigen, unteren Ende der trichterförmigen Mahlgutaufgabe, welche längsverschieblich parallel zur Längsachsenausdehnung der Walzen ausgeführt ist.

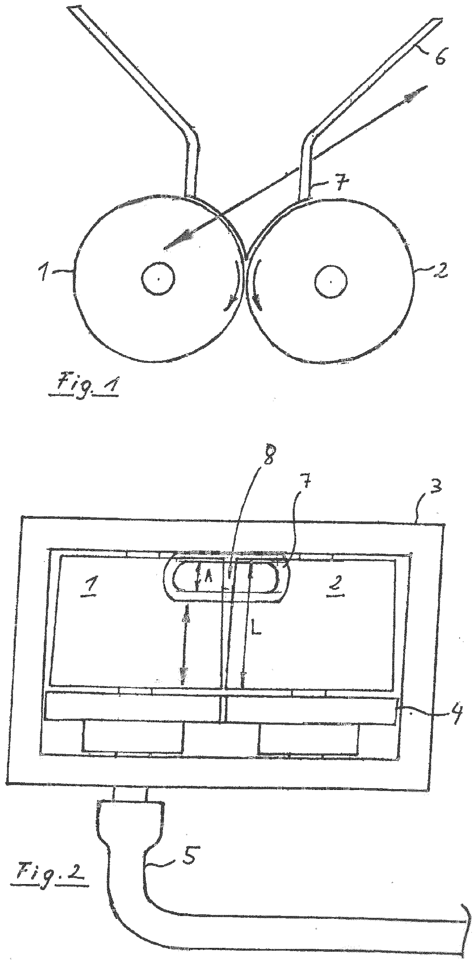

Die erfindungsgemäße Vorrichtung geht wie in den Figuren 1 und 2 gezeigt von einem Mahlwerk aus, bestehend aus zwei gegenläufigen Walzen 1; 2, die in einem Gehäuse 3 drehbar gelagert sind.

Mittels einer Getriebeanordnung 4 sowie einer Handkurbel 5 können die Walzen 1; 2 in Drehbewegung versetzt werden, wie dies durch die innerhalb der Walzen dargestellten Pfeile symbolisiert ist (siehe Figur 1).

Oberhalb des Mahlwerkes, bestehend aus den Walzen 1; 2 befindet sich eine verschiebliche, trichterförmige Mahlgutaufgabe 6.

Die Mahlgutaufgabe 6 geht an ihrer Unterseite in eine Auslaufkontur 7 über.

Das nicht dargestellte Mahlgut wird in die Trichteröffnung der Mahlgutaufgabe eingefüllt und rutscht schwerkraftbedingt über die Auslaufkontur 7 in den Mahlspalt 8 (siehe Figur 2).

Die in den Figuren gezeigten Walzen 1; 2 sind in ihrer Position einbauseitig fix zueinander so angeordnet, dass der Mahl- oder -Quetschspalt 8 über seine Länge L Abschnitte unterschiedlicher Spaltbreite aufweist.

Die trichterförmige Mahlgutaufgabe 6 nebst Auslaufkontur 7 ist über die Länge L des Mahl- oder Quetschspaltes 8 verschieblich ausgeführt.

Hierdurch kann Mahlgut wahlweise in Bereichen unterschiedlicher Spaltbreite dem Mahlwerk zugeführt werden.

Die Walzen 1; 2 können wie in der Figur 2 erkennbar, eine konische bzw. kegelstumpfförmige Form besitzen, wobei die Längsachsen der Walzen 1; 2 parallel zueinander verlaufen.

Grundsätzlich ist es aber auch möglich, Walzen mit zylindrischer Form einzusetzen, wobei in diesem Falle die Längsachsen der Walzen sich in ihrer gedachten Verlängerung schneiden, so dass zwischen den Walzen ein Mahlspalt unterschiedlicher Breite über dessen Länge gebildet wird.

Aus der Darstellung nach Figur 2 ist ersichtlich, dass die Austrittsbreite A der Mahlgutaufgabe 6 bzw. der Auslaufkontur 7 kleiner als die Länge L des Mahlspaltes 8 ist.

Die Verschiebung der Mahlgutaufgabe 6 nebst Auslaufkontur 7 erfolgt im Wesentlichen in Längsachsenrichtung der Walzen 1; 2 wie dies mit dem Doppelpfeil in der Figur 2 symbolisiert ist.

Der Abstand der Mahlgutaufgabe 6 bzw. des unteren Endes der Auslaufkontur 7 zur Oberfläche der Walzen 1; 2 (siehe Figur 1) kann einstellbar sein, um die zugeführte Mahlgutmenge variieren zu können.

Bei der Darstellung nach der Figur 2 erfolgt der Antrieb der Walzen 1; 2 und damit des Mahlwerkes über eine Kurbel 5 manuell. Selbstverständlich ist hier auch eine elektromotorische Antriebslösung denkbar, ohne den Grundgedanken der Erfindung zu verlassen.

Obwohl bei der figürlichen Darstellung, insbesondere nach Figur 2, davon ausgegangen wird, lediglich die Mahlgutaufgabe 6 nebst Auslaufkontur 7 bezogen auf die Längsausdehnung des Mahlspaltes 8 verschieblich zu gestalten, kann auch bei einer fest angeordneten Mahlgutaufgabe 6 der erfindungsgemäße Effekt dadurch erzielt werden, indem das Mahlwerk quasi bezogen auf die Auslaufkontur 7 unterhalb dieser längsverschoben wird.

## Patentansprüche

1. Vorrichtung zum Quetschen oder Mahlen von Körnern oder Flocken mit mindestens zwei gegenläufig antreibbaren, drehbeweglichen Walzen (1; 2), wobei die Walzen (1; 2) einen Mahl- oder Quetschspalt (8) bildend in einem Gehäuse (3) angeordnet sind, so dass ein Quetsch- oder Mahlwerk entsteht, wobei oberhalb des Quetsch- oder Mahlwerkes eine trichterförmige Mahlgutaufgabe (6) ausgebildet ist, welche in eine Auslaufkontur (7) übergeht,
**dadurch gekennzeichnet, dass**
die Walzen (1; 2) in ihrer Position einbauseitig fix zueinander so angeordnet sind, dass der Mahl- oder Quetschspalt (8) über seine Länge (L) Abschnitte unterschiedlicher Spaltbreite aufweist und die trichterförmige Mahlgutaufgabe (6) über die Länge des Mahl- oder Quetschspaltes (8) verschieblich ist, um Mahlgut wahlweise Bereichen unterschiedlicher Spaltbreite zuzuführen.

2. Vorrichtung nach Anspruch 1,
**dadurch gekennzeichnet, dass**
die Walzen (1; 2) eine konische oder kegelstumpfförmige Form aufweisen, wobei die Längsachsen der Walzen parallel zueinander verlaufen.

3. Vorrichtung nach Anspruch 1,
**dadurch gekennzeichnet, dass**
die Walzen eine zylindrische Form aufweisen, wobei die Längsachsen der Walzen sich in ihrer gedachten Verlängerung schneiden.

4. Vorrichtung nach einem der vorangegangenen Ansprüche,
**dadurch gekennzeichnet, dass**
die Austrittsbreite (A) der Mahlgutaufgabe kleiner als die Länge (L) des Mahlspaltes (8) ist.

5. Vorrichtung nach einem der vorangegangenen Ansprüche,
**dadurch gekennzeichnet, dass**
die Verschiebung der Mahlgutaufgabe (6) im Wesentlichen in Längsachsenrichtung der Walzen (1; 2) ausgeführt ist.

6. Vorrichtung nach einem der vorangegangenen Ansprüche,
**dadurch gekennzeichnet, dass**
der Abstand der Mahlgutaufgabe und des Austrittes (7) für das Mahlgut zur Oberfläche der Walzen (1; 2) einstellbar ist.

7. Vorrichtung nach einem der vorangegangenen Ansprüche,
**dadurch gekennzeichnet, dass**
einbauseitig mehrere Fixpunkte der Walzen für eine Grundeinstellung des Mahl- oder Quetschspaltes (8) vorgesehen sind.

8. Vorrichtung nach einem der vorangegangenen Ansprüche,
**dadurch gekennzeichnet, dass**
die Walzen (1; 2) austauschbar im Gehäuse (3) angeordnet sind.

9. Vorrichtung nach einem der vorangegangenen Ansprüche,
**dadurch gekennzeichnet, dass**
der Antrieb der Walzen (1; 2) manuell (5) oder elektromotorisch ausgebildet ist.

10. Vorrichtung nach einem der vorangegangenen Ansprüche,
**dadurch gekennzeichnet, dass**
die fix bezüglich des Mahlspaltes (8) im Gehäuse (3) angeordneten Walzen (1; 2) relativverschieblich zur Mahlgutaufgabe (6) oder zur Auslaufkontur (7) angeordnet sind.

## Claims

1. A device for crushing or grinding grains or flakes having at least two rotationally-movable rollers (1; 2) drivable in opposite directions, wherein the rollers (1; 2) are arranged in a housing (3) to form a grinding or crushing gap (8), so that a grinding or crushing mill results, wherein a funnel-shaped grinding material feed (6), which merges into an outlet contour (7), is formed above the grinding or crushing mill,
**characterized in that** the rollers (1; 2) are fixedly arranged in relation to one another in their position on the installation side in such a way that the grinding or crushing gap (8) has portions of different gap widths over its length (L) and the funnel-shaped grinding material feed (6) is displaceable over the length of the grinding or crushing gap (8) to alternately feed grinding material to regions of different gap width.

2. The device according to Claim 1,
**characterized in that** the rollers (1; 2) have the shape of a cone or truncated cone, wherein the longitudinal axes of the rollers extend in parallel to one another.

3. The device according to Claim 1,
**characterized in that** the rollers have a cylindrical shape, wherein the longitudinal axes of the rollers intersect in their imaginary extension.

4. The device according to any one of the preceding claims,
**characterized in that** the exit width (A) of the grinding material feed is less than the length (L) of the grinding gap (8).

5. The device according to any one of the preceding claims, **characterized in that** the displacement of the grinding material feed (6) is executed essentially in the longitudinal axis direction of the rollers (1; 2).

6. The device according to any one of the preceding claims,
**characterized in that** the spacing of the grinding material feed and the exit (7) for the grinding material to the surface of the rollers (1; 2) is settable.

7. The device according to any one of the preceding claims,
**characterized in that** multiple fixed points of the rollers are provided on the installation side for a base setting of the grinding or crushing gap (8).

8. The device according to any one of the preceding claims,
**characterized in that** the rollers (1; 2) are arranged in a replaceable manner in the housing (3).

9. The device according to any one of the preceding claims,
**characterized in that** the drive of the rollers (1; 2) is designed as manual (5) or electromotive.

10. The device according to any one of the preceding claims,
**characterized in that** the rollers (1; 2) arranged fixedly with respect to the grinding gap (8) in the housing (3) are arranged so they are relatively displaceable in relation to the grinding material feed (6) or the outlet contour (7).

## Revendications

1. Dispositif pour écraser ou pour moudre des grains ou des flocons, comprenant au moins deux cylindres (1 ; 2) susceptibles d'être entraînés en sens opposés et mobiles en rotation, lesdits cylindres (1 ; 2) étant agencés dans un boîtier (3) en formant un intervalle de mouture ou d'écrasement (8), de sorte qu'il en résulte un mécanisme d'écrasement ou de mouture, dans lequel au-dessus du mécanisme d'écrasement ou de mouture est réalisé un distributeur de produits à moudre (6) en forme de trémie, qui se transforme dans un contour de sortie (7),
**caractérisé en ce que**
les cylindres (1 ; 2) sont agencés dans leur position côté montage, de manière fixe l'un par rapport à l'autre de telle façon que la fente de mouture ou d'écrasement (8) présente sur sa longueur (L) des tronçons avec une largeur de fente différente et le distributeur de produits à moudre (6) en forme de trémie est déplaçable en translation sur la longueur de la fente de mouture ou d'écrasement (8) afin d'amener un produit à moudre au choix à des zones présentant une largeur de fente différente.

2. Dispositif selon la revendication 1,
**caractérisé en ce que** les cylindres (1 ; 2) présentent une forme conique ou une forme en tronc de cône, et les axes longitudinaux des cylindres s'étendent parallèlement l'un à l'autre.

3. Dispositif selon la revendication 1,
**caractérisé en ce que** les cylindres ont une forme cylindrique, telle que les axes longitudinaux des cylindres se recoupent dans leur prolongement imaginaire.

4. Dispositif selon l'une des revendications précédentes,
**caractérisé en ce que** la largeur de sortie (A) du distributeur de produits à moudre est inférieure à la longueur (L) de la fente de mouture (8).

5. Dispositif selon l'une des revendications précédentes,
**caractérisé en ce que** le déplacement en translation du distributeur de produits à moudre (6) est réalisé sensiblement dans la direction de l'axe longitudinal des cylindres (1 ; 2).

6. Dispositif selon l'une des revendications précédentes,
**caractérisé en ce que** la distance du distributeur de produits à moudre et de la sortie (7) pour le produit à moudre par rapport à la surface des cylindres (1 ; 2) est réglable.

7. Dispositif selon l'une des revendications précédentes,
**caractérisé en ce qu'**il est prévu plusieurs points fixes côté monture des cylindres pour un réglage de base de la fente de mouture ou d'écrasement (8).

8. Dispositif selon l'une des revendications précédentes,
**caractérisé en ce que** les cylindres (1 ; 2) sont agencés de façon interchangeable dans le boîtier (3).

9. Dispositif selon l'une des revendications précédentes,
**caractérisé en ce que** l'entraînement des cylindres (1 ; 2) est réalisé manuel (5) ou avec un moteur électrique.

10. Dispositif selon l'une des revendications précédentes,
**caractérisé en ce que** les cylindres (1 ; 2) agencés de manière fixe par référence à la fente de mouture (8) dans le boîtier (3) sont agencés avec possibilité de translation relative par rapport au distributeur de produits à moudre (6) ou par rapport au contour de sortie (7).
